# EUROPEAN PATENT APPLICATION

(11) **EP 4 693 880 A1**
(43) Date of publication of application: **11.02.2026**
(21) Application number: 23930474.4
(22) Date of filing: 29.03.2023
(51) Int. Cl.: H02M 7/49

(54) **ELECTRIC POWER CONVERSION APPARATUS**

(71) Applicant: MITSUBISHI ELECTRIC CORPORATION, Chiyoda-ku Tokyo 100-8310 (JP); TMEIC Corporation, Tokyo 104-0031 (JP)
(72) Inventor: KONDO, Kenichi, Tokyo 100-8310 (JP); MUKUNOKI, Kaho, Tokyo 100-8310 (JP); FUJII, Toshiyuki, Tokyo 100-8310 (JP); SADAKUNI, Hitoshi, Tokyo 100-8310 (JP); HAMANAKA, Kota, Tokyo 100-8310 (JP); ONOSATO, Kohei, Tokyo 104-0031 (JP); OKUYAMA, Ryota, Tokyo 104-0031 (JP)
(74) Representative: Hoffmann Eitle
(86) International application number: PCT/JP2023/012946
(87) International publication number: WO 2024/201836

(57) **Abstract**

A power conversion apparatus (2) includes a power converter (3) and a controller (4). The controller (4) includes a first current command computation unit (24) to compute a first current command value based on a voltage representative value of all of power storage elements (10) and a DC voltage command value, a power computation unit (23) to compute an imbalance component of output power of an arm, a first power command computation unit (27) to compute an imbalance component command value so that voltage values of the power storage elements are balanced among the arms, a phase current command computation unit (28) to generate a current command value of each of phases based on the imbalance component and the imbalance component command value, a second current command computation unit (30) to compute a second current command value based on an output voltage representative value and the current command value of each of the phases, a voltage command generator (35) to generate an output voltage command value of each of unit converters based on an output current and the first and second current command values, and a gate signal generator (70) to generate a control signal of each of switching elements based on the output voltage command value.

## Description

### TECHNICAL FIELD

The present disclosure relates to a power conversion apparatus.

### BACKGROUND ART

A modular multilevel converter (MMC) is known as a large-capacity power conversion apparatus installed in a power system. The MMC is made up of arms in which a plurality of unit converters, referred to as cells, are cascade-connected. The cell includes a plurality of semiconductor switches and a direct current (DC) capacitor and outputs a voltage across the DC capacitor or a zero voltage by turning on and off the semiconductor switches.

There is a delta connection type as one of methods of configuring arm connection of a three-phase MMC. A three-phase MMC of a delta-connected cascade type (also referred to as a "delta-connected MMC" hereinafter) has a configuration in which a plurality of cells are cascade-connected and arms including series-connected reactors are delta-connected.

In the delta-connected MMC, to keep a voltage of a power storage element within a certain range, first voltage control to keep voltage representative values of the power storage elements of all of the cells constant and second voltage control to suppress variation among the arms in the voltage representative values of the power storage elements of the cells included in each of the arms are performed.

However, when a voltage of a three-phase alternating current (AC) power supply fluctuates or when a three-phase AC voltage is unbalanced, the first voltage control and the second voltage control interfere with each other, which can hinder stable operation of the delta-connected MMC. In PTL 1 (WO 2018/211624), it is reviewed to cause the first voltage control and the second voltage control not to interfere with each other by removing a control amount of the first voltage control from a control amount of the second voltage control.

### CITATION LIST

### PATENT LITERATURE

PTL 1: WO 2018/211624

### SUMMARY OF INVENTION

### TECHNICAL PROBLEM

However, there is a problem that when the voltage of the three-phase AC power supply fluctuates or when the three-phase AC voltage is unbalanced, in the first voltage control and the second voltage control, interference occurs in an active power output generated by an output current controlled in accordance with a current command value, which is an operation amount of each.

Specifically, active power is output by the action of the output current according to the current command value, which is three-phase balanced through the first voltage control (that is, the control to keep the voltage representative values of the power storage elements of all of the cells constant), and a three-phase imbalance voltage. Since the active power corresponds to the "active power that is not balanced between the arms" to be controlled in the second voltage control, the active power becomes a disturbance in the second voltage control.

Further, through the second voltage control (that is, the control to suppress variation among the arms in the voltage representative values of the power storage elements of the cells included in each arm), the active power is output by the action of the output current according to the three-phase imbalance current command value and the three-phase imbalance voltage. Since the active power corresponds to the "active power common to the arms" to be controlled in the first voltage control, the active power becomes a disturbance in the first voltage control.

An object of an aspect of the present disclosure is to, in a power conversion apparatus including a three-phase MMC of a delta-connected cascade type, perform stable operation of the three-phase MMC when the voltage of a three-phase AC power supply fluctuates or when a three-phase AC voltage is unbalanced.

### SOLUTION TO PROBLEM

According to an embodiment, a power conversion apparatus connected to a three-phase AC power supply is provided. The power conversion apparatus includes a power converter including three delta-connected arms, and a controller to control the power converter. Each of the three arms is configured by connecting a plurality of unit converters in series. Each of the plurality of unit converters includes a plurality of switching elements and a power storage element connected to the plurality of switching elements. The controller includes a first current command computation unit to compute a first current command value of the power converter based on a voltage representative value representing voltage values of all of the power storage elements included in the power converter and a DC voltage command value, a power computation unit to compute, for each of the three arms, an imbalance component of output power of the arm based on an output current representative value and an output voltage representative value of a cell group including each of the unit converters included in the arm, a first power command computation unit to compute an imbalance component command value of output power of each of the arms so that voltage values of the power storage elements are balanced among the three arms, a phase current command computation unit to generate a current command value of each of phases based on the imbalance component of the output power of each of the arms and the imbalance component command value of the output power of each of the arms, a second current command computation unit to compute a second current command value of the power converter based on the output voltage representative value of the cell group included in each of the arms and the current command value of each of the phases, a voltage command generator to generate an output voltage command value for controlling an output voltage of each of the unit converters based on an output current of the power converter and a current command value computed from the first current command value and the second current command value, and a gate signal generator to generate a control signal of each of the switching elements included in the power converter based on the output voltage command value.

### ADVANTAGEOUS EFFECTS OF INVENTION

According to the present disclosure, in a power conversion apparatus including a three-phase MMC of the delta-connected cascade type, it is enabled to perform stable operation of the three-phase MMC when the voltage of the three-phase AC power supply fluctuates or when the three-phase AC voltage is unbalanced.

### BRIEF DESCRIPTION OF DRAWINGS

Fig. 1 is a diagram for explaining an example of an overall configuration of a power conversion apparatus.
Fig. 2 is a diagram illustrating a configuration example of an arm.
Fig. 3 is a diagram illustrating a configuration example of a cell.
Fig. 4 is a block diagram illustrating an example of a functional configuration of a controller.
Fig. 5 is a block diagram illustrating a configuration example of a DC voltage controller 20 according to a first embodiment.
Fig. 6 is a block diagram illustrating a configuration example of an output power computation unit.
Fig. 7 is a block diagram illustrating a configuration example of a total control power command computation unit.
Fig. 8 is a block diagram illustrating a configuration example of a phase control power command computation unit.
Fig. 9 is a block diagram illustrating a configuration example of a phase control current command computation unit.
Fig. 10 is a block diagram illustrating a configuration example of a current command converter.
Fig. 11 is a block diagram illustrating a configuration example of a current command computation unit.
Fig. 12 is a block diagram illustrating a configuration example of a current controller.
Fig. 13 is a block diagram illustrating a configuration example of a phase voltage command computation unit.
Fig. 14 is a block diagram illustrating a configuration example of a cell DC voltage controller.
Fig. 15 is a block diagram illustrating a configuration example of a DC voltage controller according to a second embodiment.
Fig. 16 is a block diagram illustrating a configuration example of an output power computation unit according to the second embodiment.
Fig. 17 is a block diagram illustrating a configuration example of a total control current command computation unit according to the second embodiment.
Fig. 18 is a diagram illustrating a configuration example of a phase control current command computation unit according to a third embodiment.
Fig. 19 is a diagram illustrating a configuration example of the phase control current command computation unit according to a variation of the third embodiment.

### DESCRIPTION OF EMBODIMENTS

The present embodiments are described below with reference to the drawings. In the description below, the same components are given the same reference characters. The names and functions thereof are also the same. Thus, detailed descriptions thereof are not repeated.

### [Configuration as Basis of Each Embodiment]

### <Overall Configuration>

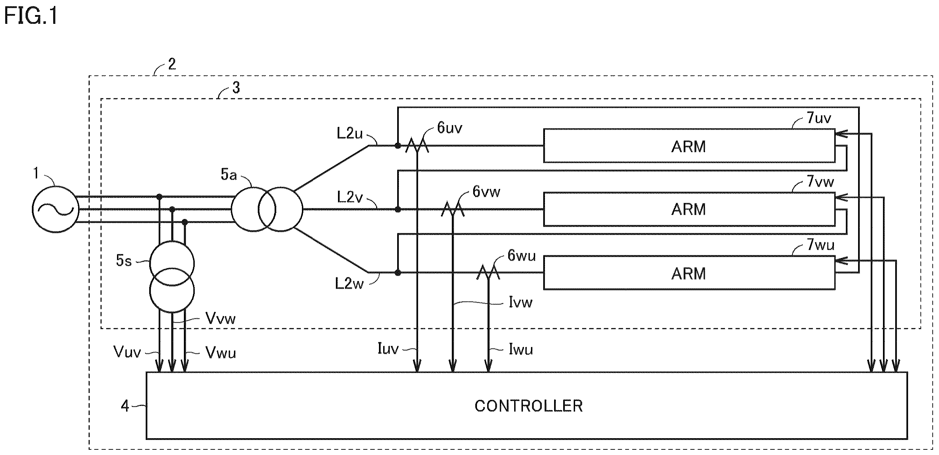

Fig. 1 is a diagram for explaining an example of an overall configuration of a power conversion apparatus 2. Power conversion apparatus 2 is connected to a three-phase AC power supply 1. Power conversion apparatus 2 includes a power converter 3 configured as an MMC and a controller 4 for controlling power converter 3. Power converter 3 includes a transformer 5a, a voltage detector 5s, current detectors 6uv, 6vw, and 6wu, and three arms 7uv, 7vw, and 7wu (which, hereinafter, may also be collectively referred to as "arms 7"). Each arm 7 is configured by connecting a plurality of unit converters in series.

One three-phase terminal of transformer 5a is connected to three-phase AC power supply 1, and the other three-phase terminal of transformer 5a is connected to one terminal of each of power lines L2u, L2v, and L2w.

Arm 7uv is connected between the other terminal of power line L2u and the other terminal of power line L2v. Arm 7vw is connected between the other terminal of power line L2v and the other terminal of power line L2w. Arm 7wu is connected between the other terminal of power line L2w and the other terminal of power line L2u. Thus, arms 7uv, 7vw, and 7wu are connected by delta connection.

Voltage detector 5s detects voltages Vuv, Vvw, and Vwu of three-phase AC power supply 1. Current detector 6uv is arranged on power line L2u and detects a current flowing through arm 7uv (which is hereinafter referred to as "arm current Iuv"). Current detector 6vw is arranged on power line L2v and detects a current flowing through arm 7vw (which is hereinafter referred to as "arm current Ivw"). Current detector 6wu is arranged on power line L2w and detects a current flowing through arm 7wu (which is hereinafter referred to as "arm current Iwu"). Detected voltages Vuv, Vvw, and Vwu and arm currents Iuv, Ivw, and Iwu are input to controller 4.

In Fig. 1, power converter 3 is connected to three-phase AC power supply 1 via transformer 5a but may be configured to be connected to three-phase AC power supply 1 via an interconnection reactor instead of transformer 5a.

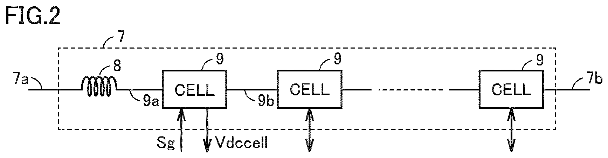

Fig. 2 is a diagram illustrating a configuration example of the arm. Since the respective configurations of arms 7uv, 7vw, and 7wu are similar, one of the arms is described as arm 7 as a representative.

Referring to Fig. 2, arm 7 is connected between two terminals 7a and 7b. Arm 7 includes a plurality of cells 9 connected in series. Each of the plurality of cells 9 performs bidirectional power conversion in accordance with a gate signal Sg from controller 4. In the present embodiment, n cells 9 (where n is an integer being 2 or more) are connected in series in each of the three arms 7uv, 7vw, and 7wu. Thus, the total number of cells 9 included in power converter 3 is 3n. The number of cells 9 included in each of arms 7uv, 7vw, and 7wu is not necessarily required to be equal to each other, and is just required to be more than or equal to the minimum number needed for the operation of power conversion apparatus 2. Accordingly, the total number of cells 9 included in power converter 3 is not limited to 3n, either.

Arm 7 further includes a reactor 8 connected in series to the plurality of cells 9. Reactor 8 is arranged so as to suppress a circulating current flowing in the delta connection. Thus, arm 7 is made up of the cell group including the plurality of cells 9, and reactor 8.

Although Fig. 2 illustrates a configuration in which reactor 8 is inserted between an output terminal 9a and terminal 7a, the configuration is not limited thereto. Reactor 8 is just required to be connected in series at a given position on the power line that connects terminals 7a and 7b and n cells 9. In the example illustrated in Fig. 2, one reactor 8 is included for one arm 7 but reactor 8 is just required to be connected to at least one of arms 7uv, 7vw, and 7wu, and the arm to be connected is selected as desired.

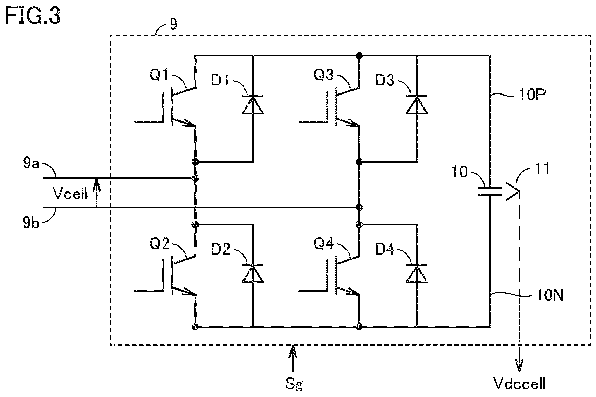

Fig. 3 is a diagram illustrating a configuration example of the cell. Referring to Fig. 3, cell 9 according to the first configuration example has a so-called full bridge configuration. Specifically, cell 9 includes a power storage element 10, a voltage detector 11, switching elements Q1 to Q4, diodes D1 to D4, and a pair of output terminals 9a and 9b.

One terminal and the other terminal of power storage element 10 are connected to a positive electrode line 10P and a negative electrode line 10N, respectively. Power storage element 10 is, for example, a capacitor that stores DC power. Voltage detector 11 detects a DC voltage between terminals of power storage element 10 (which, hereinafter, is also referred to simply as "voltage Vdccell") to output a signal indicating detected voltage Vdccell to controller 4.

Each of switching elements Q1 to Q4 is a self-turn-off power semiconductor element and is configured by, for example, an insulated gate bipolar transistor (IGBT). Switching elements Q1 to Q4 are connected to power storage element 10 via positive electrode line 10P and negative electrode line 10N.

Switching elements Q1 and Q2 are connected in series between a pair of power lines (that is, positive electrode line 10P and negative electrode line 10N). Switching elements Q3 and Q4 are connected in series between the pair of power lines. Specifically, one terminal of each of switching elements Q1 and Q3 is connected to positive electrode line 10P and the other terminal of each of switching elements Q1 and Q3 is connected to the respective one of output terminals 9a and 9b. One terminal of each of switching elements Q2 and Q4 is connected to negative electrode line 10N and the other terminal of each of switching elements Q2 and Q4 is connected to the respective one of output terminals 9a and 9b. Diodes D1 to D4 are connected in antiparallel to switching elements Q1 to Q4, respectively.

Cell 9 controls the turning on and off (that is, the switching operation) of switching elements Q1 to Q4 based on gate signal Sg from controller 4. In response to the switching operation of switching elements Q1 to Q4, cell 9 outputs, as a cell voltage Vcell, a voltage of the same polarity as that of the voltage of power storage element 10, a voltage of the opposite polarity thereto, or a zero voltage between output terminals 9a and 9b.

Cell 9 according to a second configuration example has a so-called half-bridge configuration instead of the full-bridge configuration illustrated in Fig. 3. Cell 9 according to the second configuration example has a configuration in which switching elements Q3 and Q4 and diodes D3 and D4 are removed from cell 9 according to the first configuration example illustrated in Fig. 3, and the connection position of output terminal 9b is changed onto negative electrode line 10N. Cell 9 according to the second configuration example outputs, as cell voltage Vcell, a voltage of the same polarity as that of the voltage of power storage element 10 or a zero voltage between output terminals 9a and 9b by controlling the turning on and off (that is, the switching operation) of switching elements Q1 and Q2 based on gate signal Sg.

The configuration of cell 9 illustrated in Fig. 2 is not limited to the first configuration example and the second configuration example. The configuration of cell 9 is just required to be a configuration in which a series circuit of a plurality of (for example, two) switching elements and a capacitor connected in parallel to the series circuit are included and a voltage between output terminals 9a and 9b is selectively output in response to the switching operation of the plurality of switching elements.

Referring again to Fig. 1, controller 4 controls the operation of arms 7uv, 7vw, and 7wu (that is, each of 3n cells 9) using a command from a host device, not illustrated, a detected signal input from each of the detectors, and the like.

Controller 4 can be configured by, for example, a microcomputer or the like. As an example, controller 4 includes a memory and a control processing unit (CPU), not illustrated, and can perform control operation, described below, by software processing implemented by the CPU executing a program stored in the memory in advance.

At least part of controller 4 can be configured using circuits such as a field programmable gate array (FPGA) and an application specific integrated circuit (ASIC).

### <Functional Configuration of Controller>

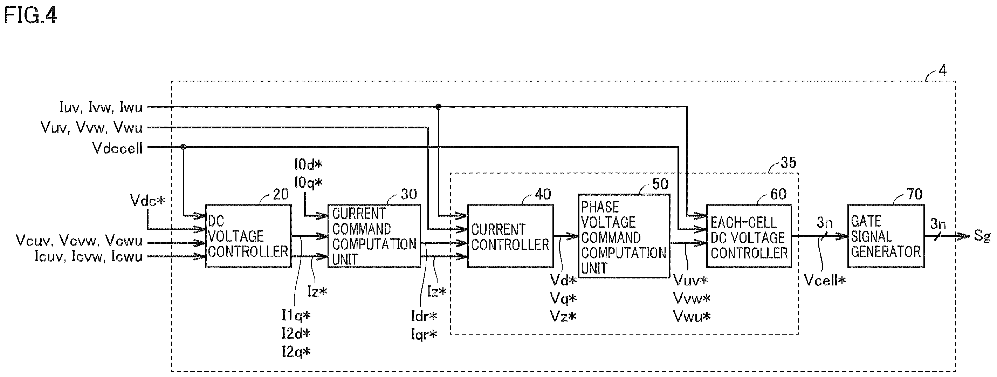

Fig. 4 is a block diagram illustrating an example of a functional configuration of the controller. The function of each of blocks illustrated in Fig. 4 can be achieved by controller 4 performing software processing and/or hardware processing.

Referring to Fig. 4, controller 4 receives respective inputs of voltages Vuv, Vvw, and Vwu detected by voltage detector 5s, arm currents Iuv, Ivw, and Iwu detected by current detectors 6uv, 6vw, and 6wu, and voltage Vdccell of power storage element 10 detected by voltage detector 11. Controller 4 computes gate signal Sg by a control computation of the configuration illustrated in Fig. 4 to output gate signal Sg to cell 9. Voltage Vdccell and gate signal Sg correspond to each of cells 9, and the respective numbers of those signals are each equal to the number of cells 9 (for example, 3n). Specifically, controller 4 includes a DC voltage controller 20, a current command computation unit 30, a voltage command generator 35, and a gate signal generator 70.

DC voltage controller 20 receives respective inputs of voltages Vcuv, Vcvw, and Vcwu, currents Icuv, Icvw, and Icwu, voltage Vdccell, and a DC voltage command value Vdc*. DC voltage controller 20 computes a first q-axis current command value I1q*, a second d-axis current command value I2d*, a second q-axis current command value I2q*, and a zero-phase current command value Iz* based on each of the parameters that have been input.

Voltages Vcuv, Vcvw, and Vcwu are respective output voltage representative values of the cell groups included in arms 7uv, 7vw, and 7wu. For example, voltages Vcuv, Vcvw, and Vcwu are voltages Vuv, Vvw, and Vwu, respectively. Alternatively, voltages Vcuv, Vcvw, and Vcwu may be values obtained by adding voltage drops due to the components of power conversion apparatus 2 other than the cell groups, which are computed from at least part of current command values I0d*, I0q*, I1q*, I2d*, I2q*, and Iz*, to voltages Vuv, Vvw, and Vwu.

Currents Icuv, Icvw, and Icwu are respective output current representative values of the cell groups included in arms 7uv, 7vw, and 7wu. For example, currents Icuv, Icvw, and Icwu are arm currents Iuv, Ivw, and Iwu, respectively. Alternatively, currents Icuv, Icvw, and Icwu may be values computed from at least part of current command values I0d*, I0q*, I1q*, I2d*, I2q*, and Iz*.

DC voltage command value Vdc* may be input from a host device, not illustrated, may be set in controller 4 in advance, or may be obtained from a predetermined computation by a DC voltage command computation unit, not illustrated.

Current command computation unit 30 computes a d-axis current command value Idr* and a q-axis current command value Iqr* of power converter 3 based on reference d-axis current command value I0d*, reference q-axis current command value I0q*, first q-axis current command value I1q*, second d-axis current command value I2d*, and second q-axis current command value I2q*.

Reference d-axis current command value I0d* and reference q-axis current command value I0q* are reference command values of a d-axis current and a q-axis current output from power converter 3. Reference d-axis current command value I0d* and reference q-axis current command value I0q* may be input from a host device, not illustrated, or may be set in controller 4 in advance. Alternatively, reference d-axis current command value I0d* and reference q-axis current command value I0g* may be obtained from respective predetermined computations by a d-axis current computation unit and a q-axis current computation unit, not illustrated. Reference q-axis current command value I0q* is not necessarily required to be used when the control of the giving and receiving of active power to and from three-phase AC power supply 1 is not included in the use of power conversion apparatus 2 other than for the purpose of maintaining voltage Vdccell of power storage element 10 within a certain range.

Voltage command generator 35 generates a cell voltage command value Vcell* for controlling an output voltage of each cell 9. Specifically, voltage command generator 35 includes a current controller 40, a phase voltage command computation unit 50, and each-cell DC voltage controller 60.

Current controller 40 computes a d-axis voltage command value Vd*, a q-axis voltage command value Vq*, and a zero-phase voltage command value Vz* based on d-axis current command value Idr*, q-axis current command value Iqr*, zero-phase current command value Iz*, voltages Vuv, Vvw, and Vwu, and arm currents Iuv, Ivw, and Iwu.

Phase voltage command computation unit 50 computes each-phase voltage command values Vuv*, Vvw*, and Vwu* based on d-axis voltage command value Vd*, q-axis voltage command value Vq*, and zero-phase voltage command value Vz*, respectively.

Cell DC voltage controller 60 computes cell voltage command value Vcell* of each of cells 9 included in power converter 3 based on each-phase voltage command values Vuv*, Vvw*, and Vwu*, arm currents Iuv, Ivw, and Iwu, and voltage Vdccell of each of power storage elements 10.

Gate signal generator 70 generates gate signal Sg based on cell voltage command value Vcell* of each of cells 9. Specifically, gate signal generator 70 performs PWM control based on each of 3n cell voltage command values Vcell* computed by each-cell DC voltage controller 60 to generate gate signal Sg for controlling the turning on and off of switching elements Q1 to Q4 of each of cells 9 included in power converter 3.

The respective configurations of DC voltage controller 20, current command computation unit 30, and voltage command generator 35 are described below in more detail.

### First Embodiment.

### <DC Voltage Controller>

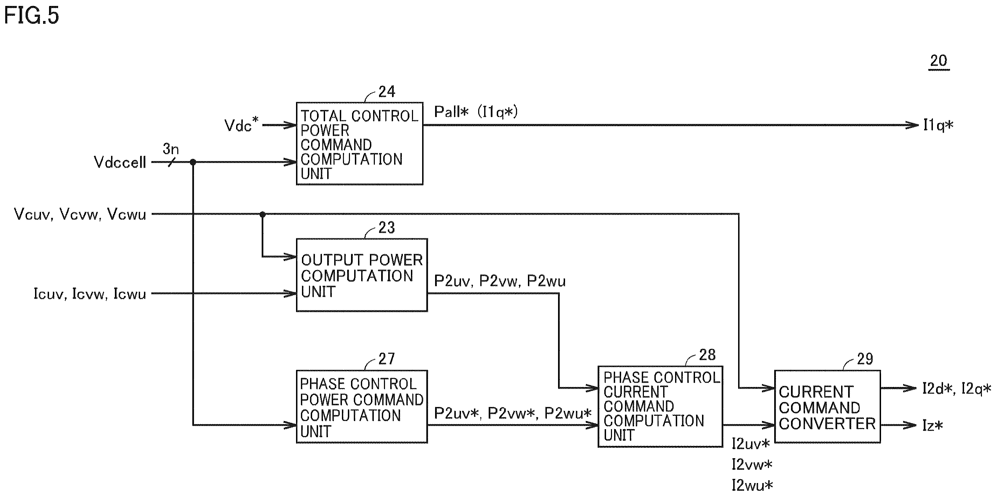

Fig. 5 is a block diagram illustrating a configuration example of DC voltage controller 20 according to a first embodiment. Referring to Fig. 5, DC voltage controller 20 includes an output power computation unit 23, a total control power command computation unit 24, a phase control power command computation unit 27, a phase control current command computation unit 28, and a current command converter 29.

Output power computation unit 23 computes imbalance components P2uv, P2vw, and P2wu of output power (that is, active power) of arms 7uv, 7vw, and 7wu based on currents Icuv, Icvw, and Icwu and voltages Vcuv, Vcvw, and Vcwu. respectively.

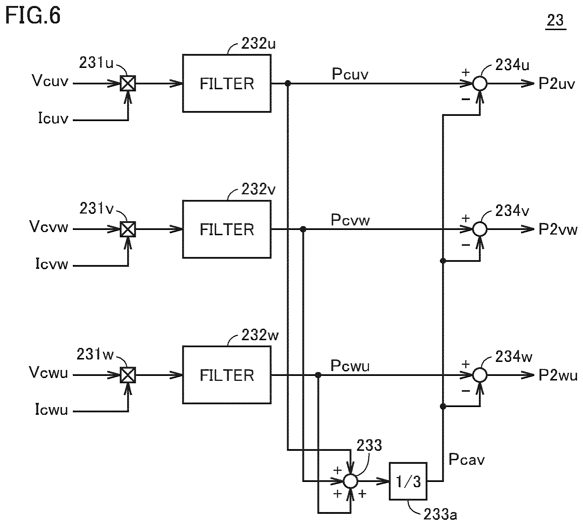

Fig. 6 is a block diagram illustrating a configuration example of the output power computation unit. Referring to Fig. 6, output power computation unit 23 includes multipliers 231u, 231v, and 231w, filters 232u, 232v, and 232w, an adder 233, a computation unit 233a, and subtractors 234u, 234v, and 234w.

Multiplier 231u outputs the product of voltage Vcuv and current Icuv that have been input. Filter 232u outputs a value Pcuv obtained by removing a frequency component 2f, which is twice the voltage frequency of three-phase AC power supply 1, from the output value of multiplier 231u. Multiplier 231v outputs the product of voltage Vcvw and current Icvw that have been input. Filter 232v outputs a value Pcvw obtained by removing frequency component 2f from the output value of multiplier 231v. Multiplier 231w outputs the product of voltage Vcwu and current Icwu that have been input. Filter 232w outputs a value Pcwu obtained by removing frequency component 2f from the output value of multiplier 231w. As each of filters 232u, 232v, and 232w, a moving average filter with a period that is one half of the voltage period of three-phase AC power supply 1 can be used.

Adder 233 computes the sum of values Pcuv, Pcvw, and Pcwu. Computation unit 233a computes an average value Pcav of values Pcuv, Pcvw, and Pcwu by multiplying the sum by one third.

Subtractor 234u subtracts average value Pcav from value Pcuv to compute imbalance component P2uv. Subtractor 234v subtracts average value Pcav from value Pcvw to compute imbalance component P2vw. Subtractor 234w subtracts average value Pcav from value Pcwu to compute imbalance component P2wu.

Thus, for each of the three arms 7uv, 7vw, and 7wu, output power computation unit 23 computes the imbalance component (such as P2uv, P2vw, P2wu) of the output power of the arm based on the output voltage representative value (such as voltages Vcuv, Vcvw, Vcwu) and the output current representative value (such as currents Icuv, Icvw, Icwu) of the cell group included in the arm.

Referring again to Fig. 5, total control power command computation unit 24 computes an all-phase active power command value Pall* based on voltage Vdccell and DC voltage command value Vdc*. In the first embodiment, total control power command computation unit 24 outputs all-phase active power command value Pall* as first q-axis current command value I1q*. Total control power command computation unit 24 according to the first embodiment functions as the "first current command computation unit" that computes first q-axis current command value I1q*.

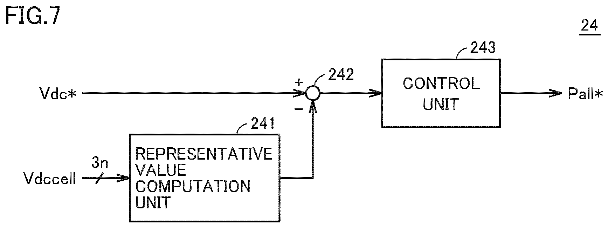

Fig. 7 is a block diagram illustrating a configuration example of total control power command computation unit 24. Referring to Fig. 7, total control power command computation unit 24 includes a representative value computation unit 241, a subtractor 242, and a control unit 243.

Representative value computation unit 241 computes a voltage representative value that represents voltage Vdccell of all of cells 9 respectively included in arms 7uv, 7vw, and 7wu (that is, 3n cells 9 included in power converter 3). The voltage representative value may be set to, for example, the average value, the maximum value, or the minimum value of voltages Vdccell of all of cells 9.

Subtractor 242 outputs a value obtained by subtracting the voltage representative value from DC voltage command value Vdc* (that is, a deviation between Vdc* and the voltage representative value). Control unit 243 executes a control computation for causing the deviation to be zero (that is, so that the voltage representative value follows DC voltage command value Vdc*) and computes all-phase active power command value Pall* to output the resultant value as first q-axis current command value I1q*.

Thus, total control power command computation unit 24 executes first voltage control for keeping the voltage representative values of voltages Vdccell of all of cells 9 constant (for, for example, causing the voltage representative values to follow DC voltage command value Vdc*) to generate all-phase active power command value Pall* (here, first q-axis current command value I1q*). That is, total control power command computation unit 24 generates first q-axis current command value I1q* for keeping the voltage representative value constant.

Referring again to Fig. 5, phase control power command computation unit 27 computes imbalance component command values P2uv*, P2vw*, and P2wu* of the output power of arms 7uv, 7vw, and 7wu based on voltage Vdccell. Specifically, phase control power command computation unit 27 computes imbalance component command values P2uv*, P2vw*, and P2wu* so that voltages Vdccell of power storage elements 10 are balanced between the three arms 7uv, 7vw, and 7wu.

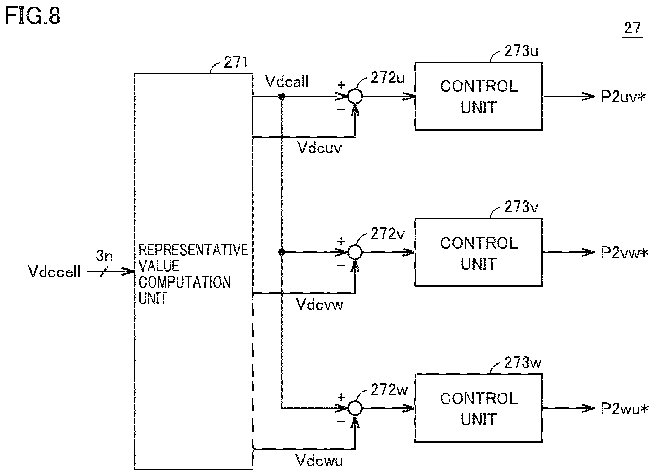

Fig. 8 is a block diagram illustrating a configuration example of phase control power command computation unit 27. Referring to Fig. 8, phase control power command computation unit 27 includes a representative value computation unit 271, subtractors 272u, 272v, and 272w, and control units 273u, 273v, and 273w.

Representative value computation unit 271 executes a predetermined representative value computation to compute a representative value Vdcuv of respective voltages Vdccell of cells 9 included in arm 7uv, a representative value Vdcvw of respective voltages Vdccell of cells 9 included in arm 7vw, and a representative value Vdcwu of respective voltages Vdccell of cells 9 included in arm 7wu. As an example, a method of computing representative value Vdcuv is described. Representative value computation unit 271 computes representative value Vdcuv by computing the average value, the maximum value, or the minimum value of respective voltages Vdccell of cells 9 included in arm 7uv and removing a fluctuation from the computed value. In the process of removing the fluctuation from the computed value, filtering through the moving average filter with a period that is one half of the voltage period of three-phase AC power supply 1 is used. The similar applies to the method of computing each of representative values Vdcvw and Vdcwu.

Representative value computation unit 271 computes a three-phase balance component Vdcall of representative values Vdcuv, Vdcvw, and Vdcwu. Three-phase balance component Vdcall is, for example, the average value of representative values Vdcuv, Vdevw, and Vdcwu.

Subtractor 272u computes a deviation between three-phase balance component Vdcall and representative value Vdcuv (that is, Vdcall-Vdcuv). Control unit 273u executes a control computation for causing the deviation computed by subtractor 272u to be zero (that is, so that representative value Vdcuv follows three-phase balance component Vdcall) to compute imbalance component command value P2uv*.

Subtractor 272v computes a deviation between three-phase balance component Vdcall and representative value Vdcvw (that is, Vdcall-Vdcvw). Control unit 273v executes a control computation for causing the deviation computed by subtractor 272v to be zero to compute imbalance component command value P2vw*.

Computation unit 272w computes a deviation between three-phase balance component Vdcall and representative value Vdcwu (that is, Vdcall-Vdcwu). Control unit 273w executes a control computation for causing the deviation computed by subtractor 272w to be zero to compute imbalance component command value P2wu*.

Thus, phase control power command computation unit 27 executes second voltage control to suppress variation among the arms in the representative values of voltages Vdccell of each of cells 9 included in each of arms 7 (for example, causing representative values Vdcuv, Vdcvw, and Vdcwu to follow three-phase balance component Vdcall) to generate imbalance component command values P2uv*, P2vw*, and P2wu*.

Referring again to Fig. 5, phase control current command computation unit 28 computes current command values I2uv*, I2vw*, and I2wu* of each phase based on imbalance components P2uv, P2vw, and P2wu of the output power of arms 7uv, 7vw, and 7wu and imbalance component command values P2uv*, P2vw*, and P2wu*. Specifically, for each of the three arms 7uv, 7vw, and 7wu, phase control current command computation unit 28 computes the current command value of the phase corresponding to the arm so that the imbalance component of the arm follows the imbalance component command value of the arm.

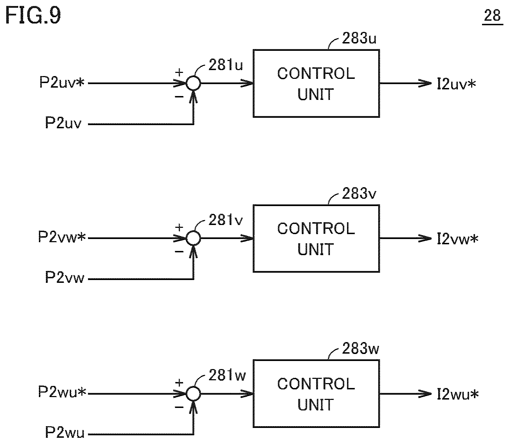

Fig. 9 is a block diagram illustrating a configuration example of phase control current command computation unit 28. Referring to Fig. 9, phase control current command computation unit 28 includes subtractors 281u, 281v, and 281w and control units 283u, 283v, and 283w.

Subtractor 281u computes a deviation between imbalance component command value P2uv* and imbalance component P2uv (that is, P2uv*-P2uv). Control unit 283u executes a control computation for causing the deviation computed by subtractor 281u to be zero (that is, so that imbalance component P2uv follows imbalance component command value P2uv*) to compute current command value I2uv*. More specifically, control unit 283u computes current command value I2uv* by, for example, feedback control for causing the deviation to be zero. The feedback control is, for example, P control or PI control. However, the feedback control may be configured by combining proportional control, integral control, differential control, and the like as desired. This also applies to control units 283v and 283w, similarly.

Subtractor 281v computes a deviation between imbalance component command value P2vw* and imbalance component P2vw (that is, P2vw*-P2vw). Control unit 283v executes a control computation for causing the deviation computed by subtractor 281v to be zero to compute current command value I2vw*.

Subtractor 281w computes a deviation between imbalance component command value P2wu* and imbalance component P2wu (that is, P2wu*-P2wu). Control unit 283w executes a control computation for causing the deviation computed by subtractor 281w to be zero to compute current command value I2wu*.

Thus, phase control current command computation unit 28 executes control computations for compensating for the respective deviations between imbalance component command values P2uv*, P2vw*, and P2wu* generated by phase control power command computation unit 27 and imbalance components P2uv, P2vw, and P2wu.

Referring again to Fig. 5, current command converter 29 computes second d-axis current command value I2d*, second q-axis current command value I2q*, and zero-phase current command value Iz* of power converter 3 based on current command values I2uv*, I2vw*, and I2wu* of each phase and voltages Vcuv, Vcvw, and Vcwu. Current command converter 29 functions as the "second current command computation unit" that computes second d-axis current command value I2d*, second q-axis current command value I2q*, and zero-phase current command value Iz*.

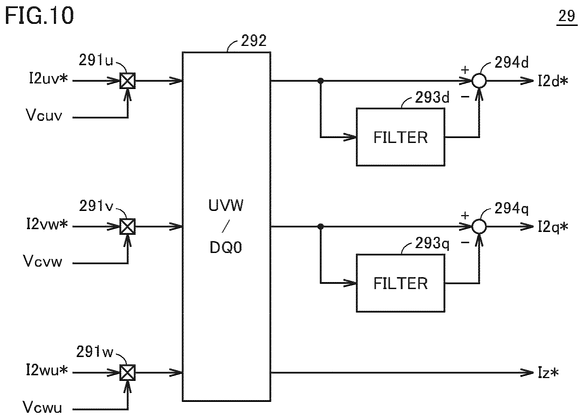

Fig. 10 is a block diagram illustrating a configuration example of current command converter 29. Referring to Fig. 10, current command converter 29 includes multipliers 291u, 291v, and 291w, a coordinate converter 292, filters 293d and 293q, and subtractors 294d and 294q.

Multiplier 291u computes the multiplication value by multiplication of current command value I2uv* and voltage Vcuv. Instead of voltage Vcuv, a sine wave having the same phase as that of voltage Vcuv and having an amplitude of 1 may be input to multiplier 291u. Multiplier 291v computes the multiplication value by multiplication of current command value I2vw* and voltage Vcvw. Instead of voltage Vcvw, a sine wave having the same phase as that of voltage Vcvw and having an amplitude of 1 may be input to multiplier 291v. Multiplier 291w computes the multiplication value by multiplication of current command value I2wu* and voltage Vcwu. Instead of voltage Vcwu, a sine wave having the same phase as that of voltage Vcwu and having an amplitude of 1 may be input to multiplier 291w.

Coordinate converter 292 converts the multiplication values of multipliers 291u, 291v, and 291w as three-phase inputs into values in dq0-axis coordinates synchronized with three-phase AC power supply 1 to generate a d-axis output value, a q-axis output value, and a zero-phase output value. The generated zero-phase output value is output as zero-phase current command value Iz*.

Filter 293d outputs a value obtained by removing frequency component 2f that is twice the voltage frequency of three-phase AC power supply 1 from the d-axis output value of coordinate converter 292. Filter 293d is configured by, for example, a notch filter. As second d-axis current command value I2d*, subtractor 294d outputs a value obtained by subtracting the output value of filter 293d from the d-axis output value of coordinate converter 292. That is, second d-axis current command value I2d* is obtained by extracting frequency component 2f from the d-axis output value of coordinate converter 292.

Filter 293q outputs a value obtained by removing frequency component 2f from the q-axis output value of coordinate converter 292. Filter 293q is configured by, for example, a notch filter. As second q-axis current command value I2q*, subtractor 294q outputs a value obtained by subtracting the output value of filter 293q from the q-axis output value. That is, second q-axis current command value I2q* is obtained by extracting frequency component 2f from the q-axis output value.

### <Current Command Computation Unit>

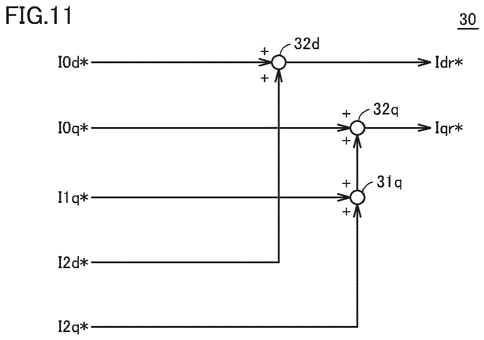

Fig. 11 is a block diagram illustrating a configuration example of current command computation unit 30. Referring to Fig. 11, current command computation unit 30 includes adders 31q, 32d, and 32q.

Adder 31q outputs an addition value obtained by addition of first q-axis current command value I1q* and second q-axis current command value I2q*. Adder 32d computes an addition value by addition of reference d-axis current command value I0d* and second d-axis current command value I2d* as d-axis current command value Idr*. Adder 32q computes an addition value by addition of reference q-axis current command value I0q* and the output value of adder 31q as q-axis current command value Iqr*.

### <Voltage Command Generator>

Referring again to Fig. 4, voltage command generator 35 generates cell voltage command value Vcell* for controlling the output voltage of each of cells 9 based on the output current (for example, arm currents Iuv, Ivw, Iwu) of power converter 3 and d-axis current command value Idr*, q-axis current command value Iqr*, and zero-phase current command value Iz*. The configurations of current controller 40, phase voltage command computation unit 50, and each-cell DC voltage controller 60 included in voltage command generator 35 are described in detail below.

### <Current Controller>

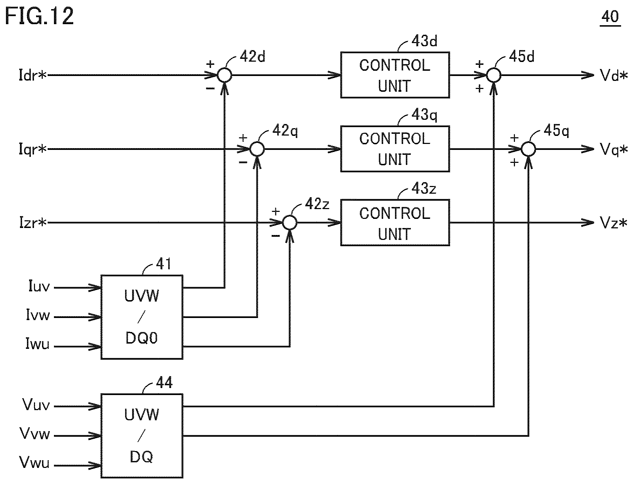

Fig. 12 is a block diagram illustrating a configuration example of current controller 40. Referring to Fig. 12, current controller 40 includes coordinate converters 41 and 44, subtractors 42d, 42q, and 42z, control units 43d, 43q, and 43z, and adders 45d and 45q.

Coordinate converter 41 converts arm currents Iuv, Ivw, and Iwu as three-phase inputs into values in dq0-axis coordinates synchronized with three-phase AC power supply 1 to generate a d-axis output value, a q-axis output value, and a zero-phase output value. Coordinate converter 44 converts voltages Vuv, Vvw, and Vwu as three-phase inputs into values in dq-axis coordinates to generate a d-axis output value and a q-axis output value.

Subtractor 42d computes a deviation between d-axis current command value Idr* and the d-axis output of coordinate converter 41 (that is, Idr*-d-axis output value). Control unit 43d executes a control computation for causing the deviation computed by subtractor 42d to be zero (that is, so that the d-axis output value follows d-axis current command value Idr*) to output a control computation value. Adder 45d computes an addition value by addition of the control computation value of control unit 43d and the d-axis output value of coordinate converter 44 as d-axis voltage command value Vd*.

Subtractor 42q computes a deviation between q-axis current command value Iqr* and the q-axis output of coordinate converter 41 (that is, Iqr*-q-axis output value). Control unit 43q executes a control computation for causing the deviation computed by subtractor 42q to be zero (that is, so that the q-axis output value follows q-axis current command value Iqr*) to output a control computation value. Adder 45q computes an addition value by addition of the control computation value of control unit 43q and the q-axis output value of coordinate converter 44 as q-axis voltage command value Vq*.

Subtractor 42z computes a deviation between zero-phase current command value Iz* and the zero-phase output value of coordinate converter 41 (that is, Iz*-zero-phase output value). Control unit 43z executes a control computation for causing the deviation computed by subtractor 42z to be zero (that is, so that the zero-phase output value follows zero-phase current command value Iz*) to compute zero-phase voltage command value Vz*.

### <Phase Voltage Command Computation Unit>

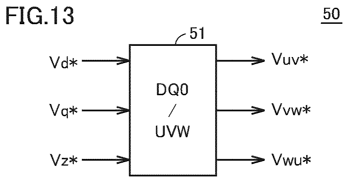

Fig. 13 is a block diagram illustrating a configuration example of phase voltage command computation unit 50. Referring to Fig. 13, phase voltage command computation unit 50 includes a coordinate converter 51. Coordinate converter 51 converts d-axis voltage command value Vd*, q-axis voltage command value Vq*, and zero-phase voltage command value Vz* as dq0-axis inputs to compute each-phase voltage command values Vuv*, Vvw*, and Vwu*.

### <Cell DC Voltage Controller>

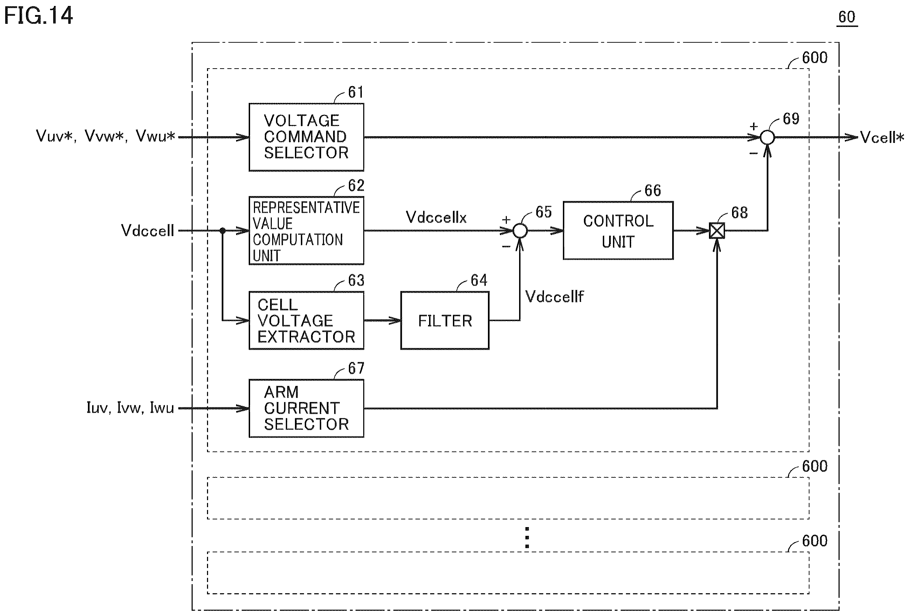

Fig. 14 is a block diagram illustrating a configuration example of cell DC voltage controller 60. Referring to Fig. 14, each-cell DC voltage controller 60 includes cell controllers 600, the number of which is 3n corresponding to the total number of cells. Each of the 3n cell controllers 600 is configured to generate cell voltage command value Vcell* of the corresponding cell 9. Since the configurations of the 3n cell controllers 600 are the same as each other, the configuration of cell controller 600 corresponding to one of cells 9 is described.

Cell controller 600 includes a voltage command selector 61, a representative value computation unit 62, a cell voltage extractor 63, a filter 64, subtractors 65 and 69, a control unit 66, an arm current selector 67, and a multiplier 68.

Voltage command selector 61 selects and outputs one of each-phase voltage command values Vuv*, Vvw*, and Vwu* according to the phase of arm 7 including cell 9 to be controlled.

Representative value computation unit 62 computes a representative value Vdccellx of voltages Vdccell of the n power storage elements 10 included in arm 7 including cell 9 to be controlled. As representative value Vdccellx, any of the average value, the maximum value, and the minimum value of the n voltages Vdccell can be used. Cell voltage extractor 63 extracts voltage Vdccell of the corresponding cell 9 from the 3n voltages Vdccell.

Filter 64 outputs a value Vdccellf obtained by removing a frequency component the same in frequency as the voltage of three-phase AC power supply 1 from voltage Vdccell extracted by cell voltage extractor 63. Filter 64 is, for example, a moving average filter having a period equal to the period of the voltage of three-phase AC power supply 1. Subtractor 65 computes a deviation between voltage Vdccellx and value Vdccellf (that is, Vdccellx-Vdccellf).

Control unit 66 executes a control computation for causing the deviation computed by subtractor 65 to be zero to output an operation amount as the control operation result. Arm current selector 67 selects and outputs one of arm currents Iuv, Ivw, and Iwu according to the phase of arm 7 including cell 9 to be controlled. Multiplier 68 multiplies the operation amount output from control unit 66 by the arm current selected by arm current selector 67.

Subtractor 69 computes cell voltage command value Vcell* of cell 9 to be controlled by subtracting the multiplication value output from multiplier 68 from the voltage command value selected by voltage command selector 61.

### <Advantages>

When the voltage of the three-phase AC power supply fluctuates or when the three-phase AC voltage is three-phase unbalanced, active power not balanced between the arms (that is, three-phase imbalance power) is output based on the output current of power converter 3 according to the three-phase balanced current command value (that is, first q-axis current command value I1q*) generated through the first voltage control by total control power command computation unit 24 (that is, the control to keep the representative value of voltages Vdccell of all of cells 9 constant) and the voltage of three-phase AC power supply 1, which is three-phase unbalanced. The active power can be a disturbance in the second voltage control by phase control power command computation unit 27 (that is, the control to suppress variation among the arms in the representative values of voltages Vdccell of each of cells 9 included in each of arms 7).

However, in the first embodiment, the three-phase imbalance power is computed as imbalance components P2uv, P2vw, and P2wu by output power computation unit 23, and imbalance components P2uv, P2vw, and P2wu are input to phase control current command computation unit 28. After that, phase control current command computation unit 28 executes control computations for compensating for the respective deviations between imbalance component command values P2uv*, P2vw*, and P2wu* generated by phase control power command computation unit 27 and imbalance components P2uv, P2vw, and P2wu. Current command values I2uv*, I2vw*, and I2wu* generated through the control computation are reflected in second d-axis current command value I2d*, second q-axis current command value I2q*, and zero-phase current command value Iz*. Then, power converter 3 outputs respective currents according to second d-axis current command value I2d*, second q-axis current command value I2q*, and zero-phase current command value Iz*.

Owing to the above-described configuration, phase control current command computation unit 28 compensates for the above-described three-phase imbalance power, which can be a disturbance of phase control power command computation unit 27. Thus, when three-phase AC power supply 1 is three-phase unbalanced, it is possible to prevent total control power command computation unit 24 and phase control power command computation unit 27 from interfering with each other and increase the operation continuity of power conversion apparatus 2.

### Second Embodiment.

In a second embodiment, another configuration of DC voltage controller 20 of the first embodiment described with reference to Fig. 5 is described. The configuration according to the second embodiment other than DC voltage controller 20 is similar to that according to the first embodiment.

### <DC Voltage Controller>

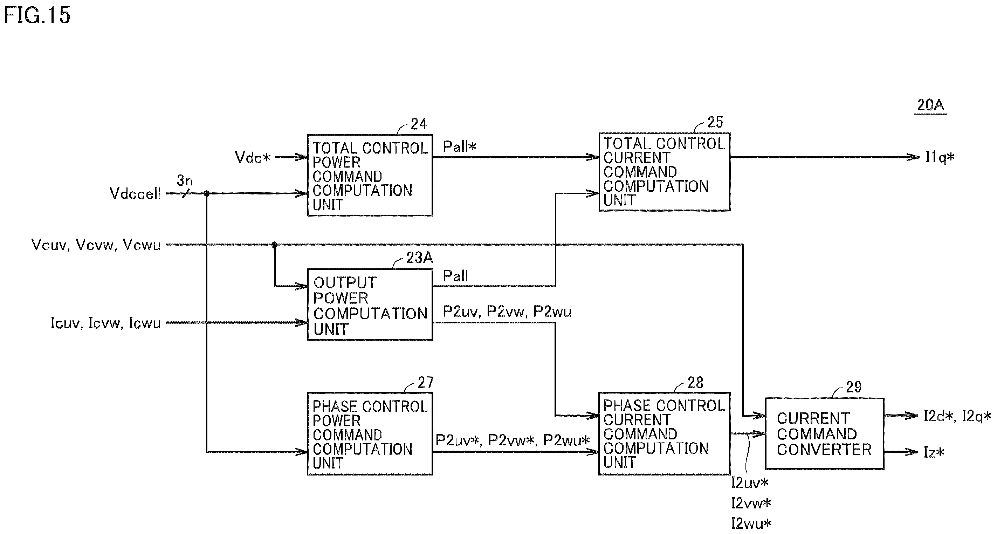

Fig. 15 is a block diagram illustrating a configuration example of a DC voltage controller 20A according to the second embodiment. For distinction from DC voltage controller 20 according to the first embodiment, the reference sign "A" is given for convenience while DC voltage controller 20A corresponds to DC voltage controller 20 in Fig. 4.

Referring to Fig. 15, DC voltage controller 20A includes an output power computation unit 23A, a total control power command computation unit 24, a total control current command computation unit 25, a phase control power command computation unit 27, a phase control current command computation unit 28, and a current command converter 29. That is, DC voltage controller 20A has a configuration in which total control current command computation unit 25 is added to DC voltage controller 20 in Fig. 5 and output power computation unit 23 in Fig. 5 is replaced with output power computation unit 23A. Detailed description of a similar configuration to that of DC voltage controller 20 is not repeated.

Output power computation unit 23A computes imbalance components P2uv, P2vw, and P2wu of the output power of arms 7uv, 7vw, and 7wu and a common component Pall based on output current representative values (such as currents Icuv, Icvw, and Icwu) and output voltage representative values (such as voltages Vcuv, Vcvw, and Vcwu) of the cell groups included in arms 7uv, 7vw, and 7wu.

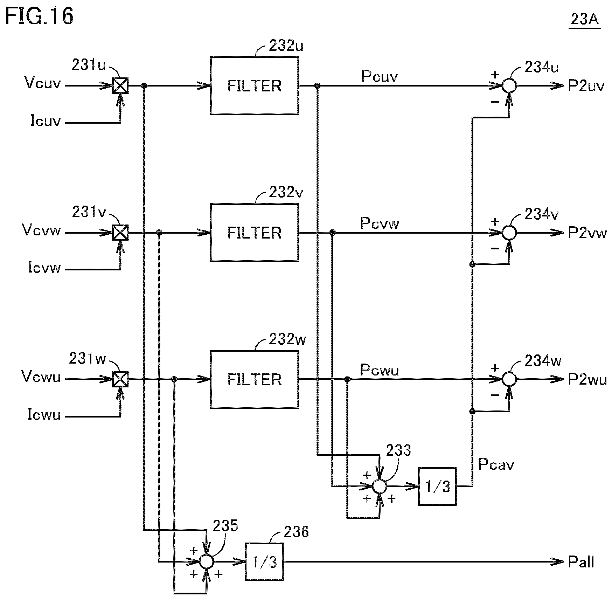

Fig. 16 is a block diagram illustrating a configuration example of output power computation unit 23A according to the second embodiment. Referring to Fig. 16, output power computation unit 23A has a configuration in which an adder 235 and a computation unit 236 are added to output power computation unit 23 in Fig. 6. Detailed description of a similar configuration to that of output power computation unit 23 is not repeated.

Adder 23 5 computes the sum of the output value of a multiplier 231u (that is, the output power of arm 7uv), the output value of a multiplier 231v (that is, the output power of arm 7vw), and the output value of a multiplier 231w (that is, the output power of arm 7wu). Computation unit 236 computes common component Pall of the output power of each of arms 7 by multiplying the sum by one third.

Referring again to Fig. 15, total control current command computation unit 25 generates a first q-axis current command value I1q* based on an all-phase active power command value Pall* and common component Pall. In the second embodiment, total control power command computation unit 24 and total control current command computation unit 25 function as the "first current command computation unit" that computes first q-axis current command value I1q*.

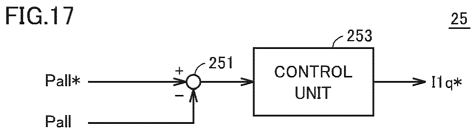

Fig. 17 is a block diagram illustrating a configuration example of total control current command computation unit 25 according to the second embodiment. Referring to Fig. 17, total control current command computation unit 25 includes a subtractor 251 and a control unit 253.

Subtractor 251 outputs a value obtained by subtracting common component Pall from all-phase active power command value Pall* (that is, a deviation between Pall* and Pall). Control unit 253 executes a control computation for causing the deviation to be zero (that is, so that common component Pall follows all-phase active power command value Pall*) to generate first q-axis current command value I1q*.

### <Advantages>

A control computation for compensating for the respective deviations between imbalance component command values P2uv*, P2vw*, and P2wu* and imbalance components P2uv, P2vw, and P2wu generated through the second voltage control by phase control power command computation unit 27 is executed. Current command values I2uv*, I2vw*, and I2wu* generated through the control computation are reflected in second d-axis current command value I2d*, second q-axis current command value I2q*, and zero-phase current command value Iz*.

When the voltage of the three-phase AC power supply fluctuates or when the three-phase AC voltage is three-phase unbalanced, active power (that is, three-phase imbalance power) that is common among the arms is output based on the current output from power converter 3 in accordance with second d-axis current command value I2d*, second q-axis current command value I2q*, and zero-phase current command value Iz* generated through the second voltage control, and the voltage of three-phase AC power supply 1 that is three-phase unbalanced. The active power can be a disturbance in the first voltage control by total control power command computation unit 24.

However, in the second embodiment, the three-phase imbalance power is computed as common component Pall by output power computation unit 23A, and common component Pall is input to total control current command computation unit 25. After that, total control current command computation unit 25 executes a control computation for compensating for the deviation between all-phase active power command value Pall* generated by total control power command computation unit 24 and common component Pall to generate first q-axis current command value I1q*. Then, power converter 3 outputs a current according to first q-axis current command value I1q*.

Owing to the above-described configuration, total control current command computation unit 25 compensates for the above-described three-phase imbalance power, which can be a disturbance of total control power command computation unit 24. Thus, when three-phase AC power supply 1 is three-phase unbalanced, it is possible to prevent total control power command computation unit 24 and phase control power command computation unit 27 from interfering with each other and increase the operation continuity of power conversion apparatus 2.

### Third Embodiment.

In a third embodiment, another configuration of phase control current command computation unit 28 of the first embodiment described with reference to Fig. 9 is described. The configuration according to the third embodiment other than phase control current command computation unit 28 is similar to that according to the first embodiment.

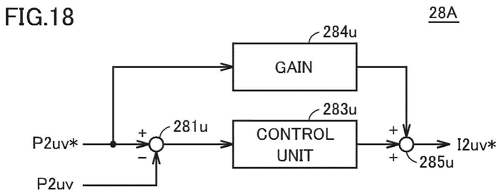

Fig. 18 is a diagram illustrating a configuration example of a phase control current command computation unit 28A according to the third embodiment. While the configuration is described, where control units 283u, 283v, and 283w respectively generate current command values I2uv*, I2vw*, and I2wu* in phase control current command computation unit 28 illustrated in Fig. 9, the methods of generating current command values I2uv*, I2vw*, and I2wu* are similar except for the input and output signals. This also applies to phase control current command computation unit 28A, similarly.

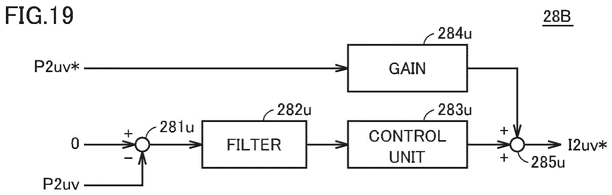

Thus, in Fig. 18, only the method of generating current command value I2uv* is described as a representative. For distinction from phase control current command computation unit 28 according to the first embodiment, the reference sign "A" is given for convenience while phase control current command computation unit 28A corresponds to phase control current command computation unit 28 in Fig. 5 or Fig. 15. This also applies to Fig. 19 described below, similarly.

Referring to Fig. 18, phase control current command computation unit 28A includes a subtractor 281u, a control unit 283u, a gain circuit 284u, and an adder 285u as a configuration for computing a current command value I2uv*.

Subtractor 281u computes a deviation between an imbalance component command value P2uv* and an imbalance component P2uv. Control unit 283u executes a control computation for causing the deviation computed by subtractor 281u to be zero (that is, so that imbalance component P2uv follows imbalance component command value P2uv*) to compute a control command value.

Gain circuit 284u outputs a value obtained by multiplying imbalance component command value P2uv* by a constant (for example, by a gain K). Adder 285u computes an addition value by addition of the output value of gain circuit 284u and the output value of control unit 283u (that is, the control command value) as current command value I2uv*. Current command values I2vw* and I2wu* are also computed in the similar manner.

With the above-described configuration, for each of the three arms 7uv, 7vw, and 7wu, phase control current command computation unit 28A computes a control command value so that the imbalance component of the arm follows the imbalance component command value of the arm, and computes, as a current command value of the phase corresponding to the arm, an addition value by addition of the control command value and the multiplication value obtained by multiplying the imbalance component command value by the gain.

Here, when the output value of control unit 283u is ignored, gain circuit 284u performs a computation through which imbalance component command value P2uv* is converted into current command value I2uv*. When the amplitude of voltage Vcuv is constant and is a sine wave, the conversion is enabled by causing gain K to be the reciprocal of the amplitude of voltage Vcuv. As a result of causing gain K to be the reciprocal of the amplitude of voltage Vcuv, the path including control unit 283u is just required to operate only when it deviates from the ideal state in which the amplitude of a voltage Vcuv is constant and is a sine wave. Accordingly, the response of control unit 283u to a change in voltage Vcuv is improved. The response of control unit 283v to a change in a voltage Vcvw and the response of control unit 283w to a change in a voltage Vwu are similarly improved.

Fig. 19 is a diagram illustrating a configuration example of a phase control current command computation unit 28B according to a variation of the third embodiment. Referring to Fig. 19, phase control current command computation unit 28B includes subtractor 281u, a filter 282u, control unit 283u, gain circuit 284u, and adder 285u. Phase control current command computation unit 28B in Fig. 19 is different from phase control current command computation unit 28A in Fig. 18 in that imbalance component command value P2uv* is not input to subtractor 281u and that filter 282u is added.

Subtractor 281u subtracts imbalance component P2uv from zero to output a value obtained by inverting the polarity of imbalance component P2uv. Filter 282u outputs a value obtained by performing filtering for removing a low frequency component from the output value of subtractor 281u. Filter 282u is, for example, a high-pass filter.

Control unit 283u executes a control computation for causing the output value of filter 282u to be zero to output a control command value. Gain circuit 284u outputs a value obtained by multiplying imbalance component command value P2uv* by a constant. Adder 285u generates an addition value by addition of the output value of gain circuit 284u and the output value of control unit 283u as current command value I2uv*. Current command values I2vw* and I2wu* are also computed in the similar manner.

With the above-described configuration, phase control current command computation unit 28B computes, for each of the three arms 7uv, 7vw, and 7wu, a control command value for causing a value obtained by performing high-pass filtering on a value obtained by inverting the polarity of an imbalance component of the arm to be zero, and computes, as a current command value of the phase corresponding to the arm, an addition value by addition of the control command value and a multiplication value obtained by multiplying the imbalance component command value by a gain.

Here, imbalance component command value P2uv* is computed by phase control power command computation unit 27 by using a voltage Vdccell as an input. Since voltage Vdccell is the voltage of power storage element 10 and is proportional to the integrated value of the active power input and output of cell 9 when a loss is excluded, the fluctuation is mainly composed of a low frequency component. Unbalanced component command value P2uv* computed by using voltage Vdccell as an input is also mainly composed of a low frequency component. On the other hand, since imbalance component P2uv is a value obtained by estimating part of the active power output of cell 9, the frequency component of the fluctuation of imbalance component P2uv is distributed to a higher frequency region in comparison with voltage Vdccell proportional to the integrated value of the active power input and output of cell 9.

According to the configuration in Fig. 19, by inputting imbalance component P2uv, from which the low frequency component is removed by filter 282u, to control unit 283u, it is enabled to facilitate raising the control frequency band of control unit 283u and enhance the effect of suppressing the fluctuation of imbalance component P2uv. The similar applies to the other imbalance components P2vw and P2wu.

### Other Embodiments.

The configurations exemplified as the above-described embodiments are each an example of the configuration according to the present disclosure and may be combined with another known technique, or may be configured by partially omitting or changing the configuration without departing from the gist of the present disclosure. Further, in the above-described embodiments, the processes and the configurations described in the other embodiments may be employed and implemented as desired.

It should be understood that the herein-disclosed embodiments are presented by way of illustration and example in all respects and are not to be taken by way of limitation. The scope of the present disclosure is defined by the claims rather than by the foregoing description and intended to include any modifications within the purport and scope equivalent to the claims.

### REFERENCE SIGNS LIST

1 three-phase AC power supply; 2 power conversion apparatus; 3 power converter; 4 controller; 5a transformer; 5s, 11 voltage detector; 6uv, 6vw, 6wu current detector; 7uv, 7vw, 7wu arm; 8 reactor; 9 cell; 10 power storage element; 20, 20A DC voltage controller; 23, 23A output power computation unit; 24 total control power command computation unit; 25 total control current command computation unit; 27 phase control power command computation unit; 28, 28A, 28B phase control current command computation unit; 29 current command converter; 30 current command computation unit; 35 voltage command generator; 40 current controller; 50 voltage command computation unit; 60 each-cell DC voltage controller; 61 voltage command selector; 62, 241, 271 representative value computation unit; 63 cell voltage extractor; 67 arm current selector; 70 gate signal generator; 600 cell controller.

## Claims

1. A power conversion apparatus connected to a three-phase AC power supply, the power conversion apparatus comprising:
a power converter including three delta-connected arms; and
a controller to control the power converter, wherein
each of the three arms is configured by connecting a plurality of unit converters in series,
each of the plurality of unit converters includes a plurality of switching elements and a power storage element connected to the plurality of switching elements,
the controller includes
a first current command computation unit to compute a first current command value of the power converter based on a voltage representative value representing voltage values of all of the power storage elements included in the power converter and a DC voltage command value,
a power computation unit to compute, for each of the three arms, an imbalance component of output power of the arm based on an output current representative value and an output voltage representative value of a cell group including each of the unit converters included in the arm,
a first power command computation unit to compute an imbalance component command value of output power of each of the arms so that voltage values of the power storage elements are balanced among the three arms,
a phase current command computation unit to generate a current command value of each of phases based on the imbalance component of the output power of each of the arms and the imbalance component command value of the output power of each of the arms,
a second current command computation unit to compute a second current command value of the power converter based on the output voltage representative value of the cell group included in each of the arms and the current command value of each of the phases,
a voltage command generator to generate an output voltage command value for controlling an output voltage of each of the unit converters based on an output current of the power converter and a current command value computed from the first current command value and the second current command value, and
a gate signal generator to generate a control signal of each of the switching elements included in the power converter based on the output voltage command value.

2. The power conversion apparatus according to claim 1, wherein the first current command computation unit computes a first power command value of the power converter so that the voltage representative value follows the DC voltage command value to output the first power command value as the first current command value.

3. The power conversion apparatus according to claim 1, wherein
the power computation unit further computes a common component of output power of the three arms based on the output current representative value and the output voltage representative value of the cell group included in each of the three arms,
the first current command computation unit
computes a first power command value of the power converter so that the voltage representative value follows the DC voltage command value, and
computes the first current command value so that the common component follows the first power command value.

4. The power conversion apparatus according to any one of claims 1 to 3, wherein the phase current command computation unit computes, for each of the three arms, a control command value so that the imbalance component of the arm follows the imbalance component command value of the arm, and computes the control command value as a current command value of the phase corresponding to the arm.

5. The power conversion apparatus according to any one of claims 1 to 3, wherein the phase current command computation unit computes, for each of the three arms, a control command value so that the imbalance component of the arm follows the imbalance component command value of the arm, and computes, as a current command value of the phase corresponding to the arm, an addition value by addition of the control command value and a multiplication value obtained by multiplying the imbalance component command value of the arm by a gain.

6. The power conversion apparatus according to claim 4 or 5, wherein
the control command value is computed through feedback control for causing a deviation between the imbalance component and the imbalance component command value to be zero, and
the feedback control is P control or PI control.

7. The power conversion apparatus according to any one of claims 1 to 3, wherein the phase current command computation unit computes, for each of the three arms, a control command value for causing a value obtained by performing high-pass filtering on a value obtained by inverting a polarity of the imbalance component of the arm to be zero, and computes, as a current command value of the phase corresponding to the arm, an addition value by addition of the control command value and a multiplication value obtained by multiplying the imbalance component command value of the arm by a gain.
